# FASCICULE DE BREVET EUROPEEN

(11) **EP 3 191 746 B1**
(45) Date de publication et mention de la délivrance du brevet: **31.10.2018**
(21) Numéro de dépôt: 15778357.2
(22) Date de dépôt: 08.09.2015
(51) Int. Cl.: F16J 15/44, F16J 15/34

(54) **SYSTÈME D'ÉTANCHÉITÉ ET TURBOPOMPE COMPRENANT UN TEL SYSTÈME**
DICHTUNGSSYSTEM UND TURBOPUMPE MIT SOLCH EINEM SYSTEM
SEALING SYSTEM AND TURBOPUMP COMPRISING SUCH A SYSTEM

(30) Priorité: 11.09.2014 FR 1458546
(43) Date de publication de la demande: 19.07.2017
(73) Titulaire: SAFRAN AIRCRAFT ENGINES, 75015 Paris (FR)
(72) Inventeur: FABBRI, Laurent, F-27620 Gasny (FR); LANGLOIS, Vincent, 71100 CHALON SUR SAONE (FR); SENE, Cédric, 76100 Rouen (FR)
(74) Mandataire: Intès, Didier Gérard André
(86) Numéro de dépôt international: PCT/FR2015/052379
(87) Numéro de publication internationale: WO 2016/038293

(56) Documents cités:
- EP-A1- 2 698 567
- DE-A1- 10 217 181
- US-A1- 2012 261 887

## Description

### DOMAINE DE L'INVENTION

Le présent exposé concerne un système d'étanchéité pour la réalisation d'une étanchéité dynamique entre un arbre tournant et son support, en particulier un arbre de turbopompe. Le présent exposé concerne également une telle turbopompe.

### ETAT DE LA TECHNIQUE ANTERIEURE

Une turbopompe comprend classiquement (voir, par exemple, la figure 3 de la demande de brevet FR 2772843 A1) des éléments de turbine, alimentés par un flux de gaz chauds pour l'entraînement d'un arbre tournant ; et des éléments de pompe, entraînés en rotation par l'arbre tournant pour déplacer un liquide, par exemple de l'hydrogène liquide destiné à alimenter un moteur-fusée.

Une telle turbopompe doit comprendre un système d'étanchéité capable d'assurer une étanchéité dynamique au niveau de l'arbre tournant, à l'interface entre la partie turbine et la partie pompe pour éviter la rencontre des flux de gaz et du liquide entraîné. Un tel système doit pouvoir assurer une étanchéité continue même lorsque l'arbre tournant subit des déplacements transversaux, principalement du fait des vibrations auxquelles l'arbre est soumis à une vitesse de rotation élevée (un arbre d'une turbopompe peut effectuer plusieurs dizaines de milliers de tours par minute).

Un tel système d'étanchéité est de façon connue constitué d'une bague montée flottante dans un support de l'arbre tournant. Une telle bague a pour vocation de suivre les déplacements transversaux de l'arbre tournant pour empêcher une dégradation de l'étanchéité dynamique provoquée par ces déplacements et les contacts éventuels avec le rotor. (voir DE-A-10217181)

Une telle bague flottante doit en revanche être empêchée de tourner autour de l'axe de rotation de l'arbre tournant, lorsque ce dernier est en mouvement. Le fluide en rotation entre l'arbre tournant et la bague (surtout lorsque ce fluide est visqueux), de même que les possibles contacts entre l'arbre tournant et la bague, génèrent en effet un couple suivant l'axe de rotation de l'arbre tournant qu'il convient de neutraliser pour éviter les éventuels chocs à haute vitesse qui pourraient autrement être causés par la bague.

Pour éviter cette rotation, la bague est reliée directement au support à l'aide d'un ou plusieurs pions anti-rotation régulièrement espacés sur le pourtour circonférentiel de la bague flottante et coopérant avec des parties de liaison associées qui sont formées dans le support.

Un inconvénient majeur de cette solution est que la présence du ou des pions anti-rotation perturbe le fonctionnement (la flottabilité) de la bague, et ce quelles que soient les améliorations pouvant être envisagées actuellement (réduction du jeu, augmentation de la longueur axiale de la bague, etc...). Les conséquences d'une telle perturbation peuvent être :
▪ une perte de flottabilité ;
▪ un basculement de la bague autour du ou des pions ;
▪ un contact entre l'arbre et la bague susceptible d'endommager ou user prématurément la bague et d'augmenter les fuites ;
▪ une instabilité de fonctionnement de la bague ;
▪ un matage des arêtes du ou des pions anti-rotation.

Il existe donc un besoin pour la mise au point d'un système d'étanchéité capable d'assurer une étanchéité dynamique entre un arbre tournant et son support à la fois sûre et efficace.

### PRESENTATION DE L'INVENTION

Un premier aspect du présent exposé concerne un système d'étanchéité à au moins une bague montée flottante dans un support d'un arbre tournant autour d'un axe dirigé selon une direction longitudinale pour la réalisation d'une étanchéité dynamique entre l'arbre et le support. Le système comprend une pièce de couplage interposée entre la bague et le support et par l'intermédiaire de laquelle la bague est solidarisée avec le support. Le support et la pièce de couplage comprennent des premières parties de liaison respectives aptes à coopérer ensemble pour réaliser une première liaison cinématique autorisant un mouvement relatif du support et de la pièce de couplage de type pivot glissant dirigé selon une première direction transverse. La bague et la pièce de couplage comprennent des deuxièmes parties de liaison respectives aptes à coopérer ensemble pour réaliser une deuxième liaison cinématique autorisant un mouvement relatif de la bague et de la pièce de couplage de type pivot glissant dirigé selon une deuxième direction transverse perpendiculaire à la première direction transverse.

Dans le présent exposé, on entend désigner par l'expression « direction longitudinale » une direction parallèle à l'axe de rotation de l'arbre tournant, lequel axe de rotation est ainsi dirigé selon cette direction longitudinale.

Dans le présent exposé, on entend désigner par l'expression « direction transverse » une direction comprise dans un plan perpendiculaire à la direction longitudinale précitée. On pourrait ainsi aussi qualifier une telle direction de « direction radiale », par rapport à l'axe de rotation de l'arbre tournant. Un tel plan perpendiculaire sera dès lors caractérisé de « plan transverse » dans le présent exposé. On pourrait également le caractériser de « plan radial », par rapport à l'axe de rotation de l'arbre tournant.

Dans le présent exposé, on entend désigner par l'expression « une première liaison cinématique autorisant un mouvement relatif du support et de la pièce de couplage de type pivot glissant dirigé selon une première direction transverse » une liaison entre le support et la pièce de couplage qui autorise les deux degrés de liberté suivants entre le support et la pièce de couplage :
▪ rotation du support et de la pièce de couplage l'un par rapport à l'autre suivant une première direction transverse, perpendiculaire à la direction longitudinale ; et
▪ translation du support et de la pièce de couplage l'un par rapport à l'autre suivant cette première direction transverse.

De même, dans le présent exposé, on entend désigner par l'expression « une deuxième liaison cinématique autorisant un mouvement relatif de la bague et de la pièce de couplage de type pivot glissant dirigé selon une deuxième direction transverse perpendiculaire à la première direction transverse » une liaison entre la bague et la pièce de couplage qui autorise les deux degrés de liberté suivants entre la bague et la pièce de couplage :
▪ rotation de la bague et de la pièce de couplage l'une par rapport à l'autre suivant une deuxième direction transverse, qui est perpendiculaire à la direction longitudinale et qui est perpendiculaire à la première direction transverse ; et
▪ translation de la bague et de la pièce de couplage l'une par rapport à l'autre suivant cette deuxième direction transverse.

Ainsi, en interposant une pièce de couplage dissociée de la bague entre cette dernière et le support de manière à découpler les composantes de déplacement selon deux directions transverses perpendiculaires l'une par rapport à l'autre à l'aide de première et deuxième liaisons cinématiques du type précédemment décrit, la bague est capable de suivre n'importe quel déplacement transversal de l'arbre tournant, aussi bien en rotation qu'en translation.

Une étanchéité dite « primaire », prévue à une interface entre des surfaces circonférentielles respectives de l'arbre tournant et de la bague, peut ainsi être efficacement réalisée.

En même temps, le fait de diriger les première et deuxième liaisons de type pivot glissant, selon respectivement des première et deuxième directions transverses qui sont toutes deux perpendiculaires à la direction longitudinale autour de laquelle tourne l'arbre tournant, empêche aussi bien la bague que la pièce de couplage de tourner autour de cette direction longitudinale. En fait, parmi les six degrés de liberté possibles de la bague par rapport au support, le seul degré de liberté qui est supprimé (en pratique aux jeux de fonctionnement près) par ce système d'étanchéité est le degré de liberté correspondant à une rotation de la bague autour de cette direction longitudinale (ce degré de liberté étant en pratique d'autant mieux supprimé que les jeux mis en oeuvre entre les premières et entre les deuxièmes parties de liaison sont faibles).

Ainsi, cette solution permet d'assurer une étanchéité dynamique entre l'arbre tournant et le support qui est à la fois sûre et efficace. La bague peut aisément suivre les déplacements transverses de l'arbre tournant tout en étant empêchée d'être entraînée en rotation par l'arbre selon la direction longitudinale.

Cette solution peut en outre être mise en oeuvre avec un faible encombrement, la pièce de couplage pouvant être radialement interposée entre la bague et le support.

Dans certains modes de réalisation, le système peut être tel que chacune des premières parties de liaison est non déformable (dans des conditions normales d'utilisation du système d'étanchéité).

Ainsi, lorsque les premières parties de liaison respectives du support et de la pièce de couplage coopèrent mutuellement pour réaliser la première liaison cinématique, aucune de ces premières parties de liaison ne se déforme (dans des conditions normales d'utilisation du système d'étanchéité).

Dans certains modes de réalisation, le système peut être tel que chacune des deuxièmes parties de liaison est non déformable (dans des conditions normales d'utilisation du système d'étanchéité).

Ainsi, lorsque les deuxièmes parties de liaison respectives de la bague et de la pièce de couplage coopèrent mutuellement pour réaliser la deuxième liaison cinématique, aucune de ces deuxièmes parties de liaison ne se déforme (dans des conditions normales d'utilisation du système d'étanchéité).

Dans certains modes de réalisation, le système peut être tel qu'au moins une des premières parties de liaison est apte à être déformée élastiquement, au choix, par compression et/ou flexion et/ou torsion (dans des conditions normales d'utilisation du système d'étanchéité).

Ainsi, lorsque les premières parties de liaison respectives du support et de la pièce de couplage coopèrent mutuellement pour réaliser la première liaison cinématique, au moins une de ces premières parties de liaison (i.e. une seule ou chaque première partie de liaison appartenant au support et/ou une seule ou chaque première partie de liaison appartenant à la pièce de couplage, au choix) se déforme élastiquement, au choix, par compression et/ou flexion et/ou torsion (dans des conditions normales d'utilisation du système d'étanchéité).

Dans certains modes de réalisation, le système peut être tel qu'au moins une des deuxièmes parties de liaison est apte à être déformée élastiquement, au choix, par compression et/ou flexion et/ou torsion (dans des conditions normales d'utilisation du système d'étanchéité).

Ainsi, lorsque les deuxièmes parties de liaison respectives de la bague et de la pièce de couplage coopèrent mutuellement pour réaliser la deuxième liaison cinématique, au moins une de ces deuxièmes parties de liaison (i.e. une seule ou chaque deuxième partie de liaison appartenant à la bague et/ou une seule ou chaque deuxième partie de liaison appartenant à la pièce de couplage, au choix) se déforme élastiquement, au choix, par compression et/ou flexion et/ou torsion (dans des conditions normales d'utilisation du système d'étanchéité).

Dans certains modes de réalisation, le système peut être tel qu'il comprend une unique paire de premières parties de liaison appartenant respectivement au support et à la pièce de couplage et configurées pour coopérer mutuellement.

Dans certains modes de réalisation, le système peut être tel qu'il comprend au moins une première paire de premières parties de liaison appartenant respectivement au support et à la pièce de couplage et configurées pour coopérer mutuellement ; et une deuxième paire de premières parties de liaison appartenant respectivement au support et à la pièce de couplage et configurées pour coopérer mutuellement, ces première et deuxième paires étant espacées l'une de l'autre selon la première direction transverse.

Dans certains modes de réalisation, le système peut être tel qu'il comprend une unique paire de deuxièmes parties de liaison appartenant respectivement à la bague et à la pièce de couplage et configurés pour coopérer mutuellement.

Dans certains modes de réalisation, le système peut être tel qu'il comprend au moins une première paire de deuxièmes parties de liaison appartenant respectivement à la bague et à la pièce de couplage et configurées pour coopérer mutuellement ; et une deuxième paire de deuxième parties de liaison appartenant respectivement à la bague et à la pièce de couplage et configurées pour coopérer mutuellement, ces première et deuxième paires étant espacées l'une de l'autre selon la deuxième direction transverse.

Dans certains modes de réalisation, le système peut être tel que le support et la bague comprennent des troisièmes parties de liaison respectives aptes à coopérer ensemble pour réaliser une troisième liaison cinématique autorisant un mouvement relatif du support et de la bague de type appui plan dans un plan transverse.

Dans le présent exposé, on entend désigner par l'expression « une troisième liaison cinématique autorisant un mouvement relatif du support et de la bague de type appui plan dans un plan transverse » une liaison entre le support et la bague qui autorise les trois degrés de liberté suivants entre le support et la bague :
▪ translation de la bague et du support l'un par rapport à l'autre suivant la première direction transverse ; et
▪ translation de la bague et du support l'un par rapport à l'autre suivant la deuxième direction transverse ; et
▪ rotation de la bague et du support l'un par rapport à l'autre suivant l'axe longitudinal (toutefois, en pratique, comme nous l'avons vu plus haut, du fait de la présence des première et deuxième liaisons cinématiques, cette possibilité de rotation est d'autant plus restreinte que les jeux mis en oeuvre entre les premières et entre les deuxièmes parties de liaison le sont également).

Une telle liaison de type appui plan entre le support et la bague permet d'assurer efficacement une étanchéité dite « secondaire », prévue à une interface entre des surfaces planes transverses respectives du support et de la bague qui matérialisent les troisièmes parties de liaison respectives.

La dissociation de l'étanchéité primaire précitée, qui est établie entre l'arbre tournant et la bague, de l'étanchéité secondaire, qui elle est établie entre la bague et le support, peut rendre plus aisée l'obtention d'une étanchéité globale efficace entre l'arbre tournant et le support.

Par ailleurs, le fait que la bague soit autorisée à pivoter selon aussi bien la première que la deuxième direction transverse, grâce aux première et deuxième liaisons cinématiques du type précité, contribue à assurer une continuité dans le contact plan, dans le plan transverse, qui est instauré par la troisième liaison cinématique entre la bague et le support.

Dans certains modes de réalisation, le système peut être tel qu'il comprend un élément de sollicitation apte à coopérer avec le support et la bague pour solliciter la coopération des troisièmes parties de liaison respectives.

Un tel élément de sollicitation peut également contribuer à assurer une continuité dans le contact plan précité en exerçant une force de rappel du support et de la bague l'un contre l'autre.

Dans certains modes de réalisation, le système peut être tel que la pièce de couplage et l'élément de sollicitation sont dissociés l'un de l'autre.

Dans certains modes de réalisation, le système peut être tel que la pièce de couplage et l'élément de sollicitation sont formés d'un seul tenant, ce qui peut simplifier le système et réduire son encombrement suivant la direction longitudinale et/ou transversale.

Dans certains modes de réalisation, le système peut être tel que le plan transverse et l'élément de sollicitation sont agencés longitudinalement de part et d'autre de la bague.

Ainsi, le plan transverse, dans lequel le contact plan est établi entre le support et la bague, et l'élément de sollicitation sont, suivant la direction longitudinale, espacés l'un de l'autre avec la bague interposée entre eux.

Un deuxième aspect selon le présent exposé concerne une turbopompe comprenant un arbre tournant et un système d'étanchéité selon le premier aspect précité.

On pourrait toutefois prévoir, sans sortir du cadre du présent exposé, de monter le système d'étanchéité dans une machine tournante autre qu'une turbomachine ou une turbopompe, à partir du moment où une telle machine tournante comprend au moins un arbre tournant au niveau duquel il faut réaliser une étanchéité dynamique.

Les caractéristiques et avantages précités, ainsi que d'autres, apparaîtront mieux à la lecture de la description détaillée qui suit, d'exemples de réalisation qui sont dépourvus de tout caractère limitatif et qui sont simplement proposés à titre illustratif. Cette description détaillée fait référence aux dessins annexés.

### BREVE DESCRIPTION DES DESSINS

Les dessins annexés sont schématiques et ne sont pas à l'échelle, ils visent avant tout à illustrer les principes mentionnés dans le présent exposé. Sur ces dessins annexés :
- la figure 1 représente un premier schéma cinématique d'un système d'étanchéité conforme au présent exposé lorsqu'il est observé depuis un plan transverse ;
- la figure 2 représente un deuxième schéma cinématique de ce système d'étanchéité lorsqu'il est observé depuis un premier plan longitudinal passant par une première direction transverse ;
- la figure 3 représente un troisième schéma cinématique de ce système d'étanchéité lorsqu'il est observé depuis un deuxième plan longitudinal passant par une deuxième direction transverse perpendiculaire à la première direction transverse ;
- la figure 4 monte une vue en coupe dans un plan transverse d'un premier exemple de réalisation de ce système d'étanchéité conforme au présent exposé, dans laquelle l'arbre tournant occupe une première position dans ce plan transverse ;
- la figure 5 est une vue analogue à celle de la figure 4, dans laquelle l'arbre tournant occupe une deuxième position dans ce plan transverse ;
- la figure 6 représente une vue en perspective éclatée de ce premier exemple de réalisation ;
- la figure 7 est une vue analogue à celle de la figure 6, dans laquelle seule une première pièce du support est représentée séparée des autres pièces ;
- la figure 8 est une vue plane dans un plan transverse de ce premier exemple de réalisation ;
- les figures 9A, 9B et 9C sont des vues partielles en coupe selon respectivement les plans A-A (selon la deuxième direction transverse Y), B-B (selon la première direction transverse X) et C-C illustrés sur la figure 8 ;
- la figure 10 représente une vue en perspective éclatée d'un deuxième exemple de réalisation de ce système d'étanchéité conforme au présent exposé ;
- la figure 11 montre une vue en perspective d'une pièce de couplage selon ce deuxième exemple prise isolément ;
- la figure 12 est une vue plane dans un plan transverse de ce deuxième exemple de réalisation ;
- les figures 13A, 13B et 13C sont des vues partielles en coupe selon respectivement les plans A-A (selon la première direction transverse X), B-B (selon la deuxième direction transverse Y) et C-C illustrés sur la figure 12;
- la figure 14 représente une vue en perspective d'une pièce de couplage selon un troisième exemple de réalisation de ce système d'étanchéité conforme au présent exposé ;
- la figure 15 montre une vue partielle en perspective de ce troisième exemple de réalisation.

### DESCRIPTION DETAILLEE D'EXEMPLES DE REALISATION

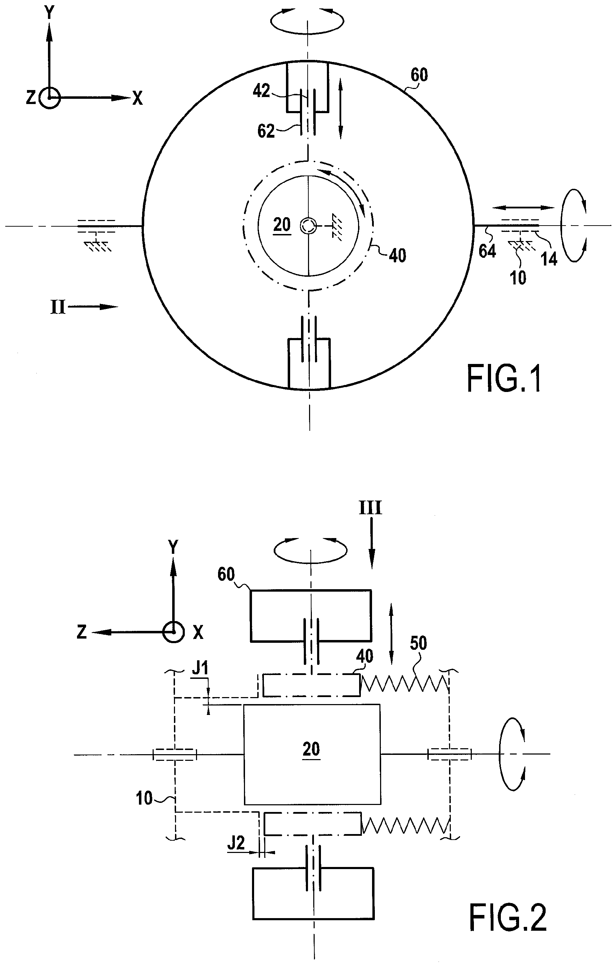

Aux figures 1 à 3, on a représenté à l'aide de schémas cinématiques un système d'étanchéité conforme au présent exposé et les éléments représentés sur ces figures sont associés à des références numériques.

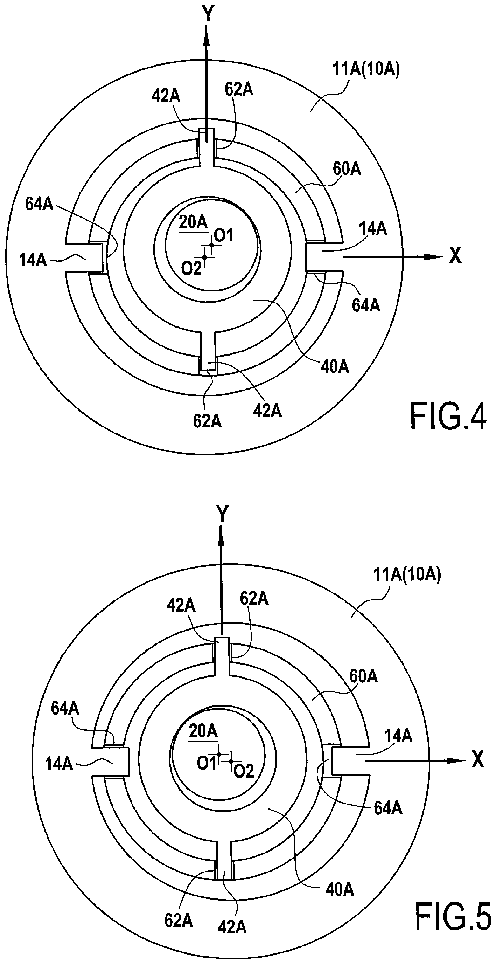

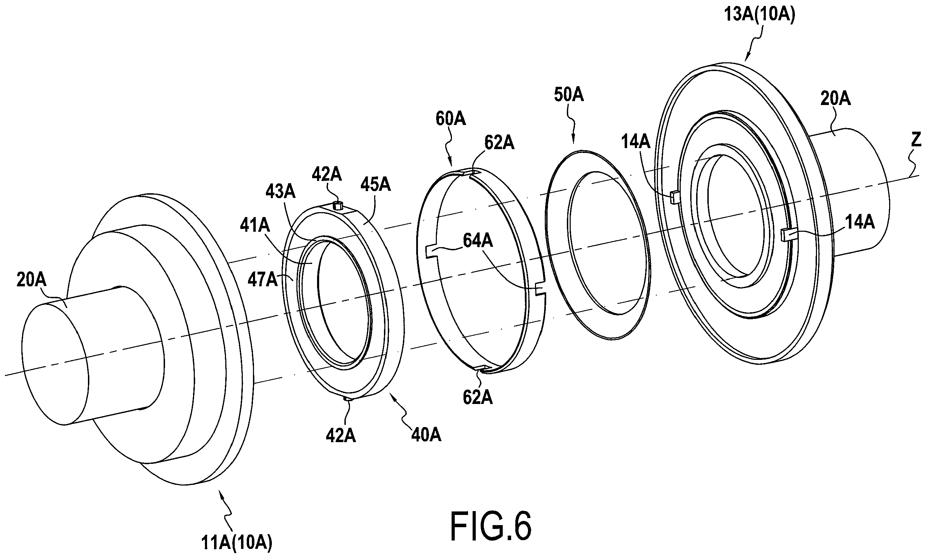

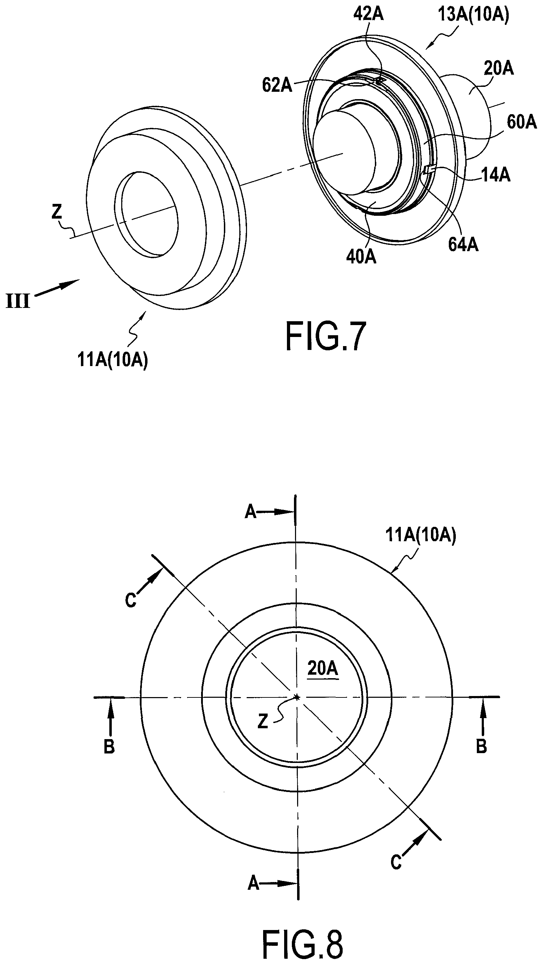

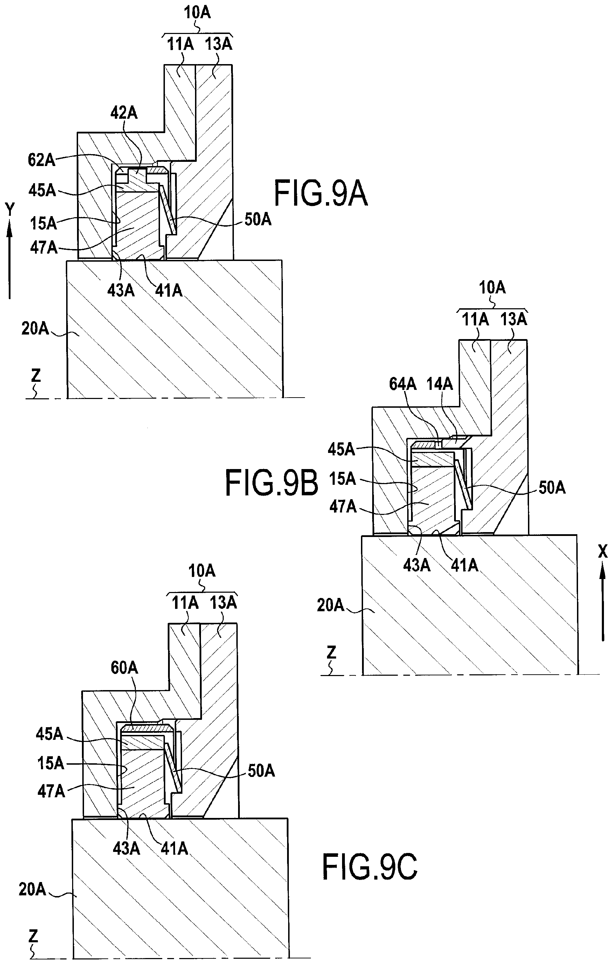

Un tel système d'étanchéité peut être mis en oeuvre, par exemple et non nécessairement, par l'un quelconque des trois exemples de réalisation illustrés aux figures 4 à 15.

Plus précisément, le premier exemple de réalisation est illustré aux figures 4 à 9C et les éléments représentés sur ces figures sont associés à des références numériques correspondant à celles utilisées sur les figures 1 à 3 et à la fin desquelles est ajoutée ici la lettre « A » pour identifier ce premier exemple de réalisation.

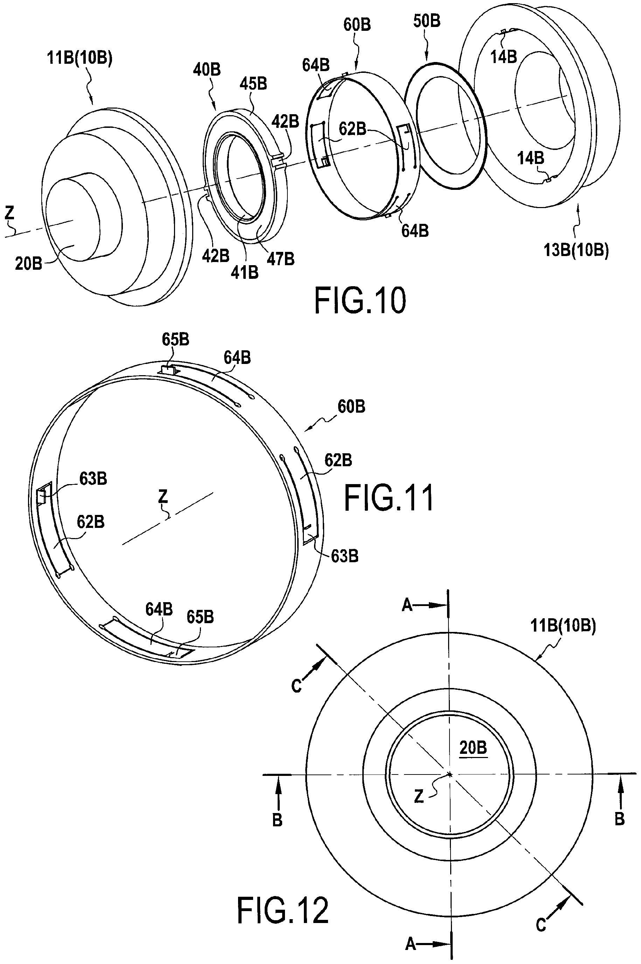

Le deuxième exemple de réalisation est illustré aux figures 10 à 13C et les éléments représentés sur ces figures sont associés à des références numériques correspondant à celles utilisées sur les figures 1 à 3 et à la fin desquelles est ajoutée ici la lettre « B » pour identifier ce deuxième exemple de réalisation.

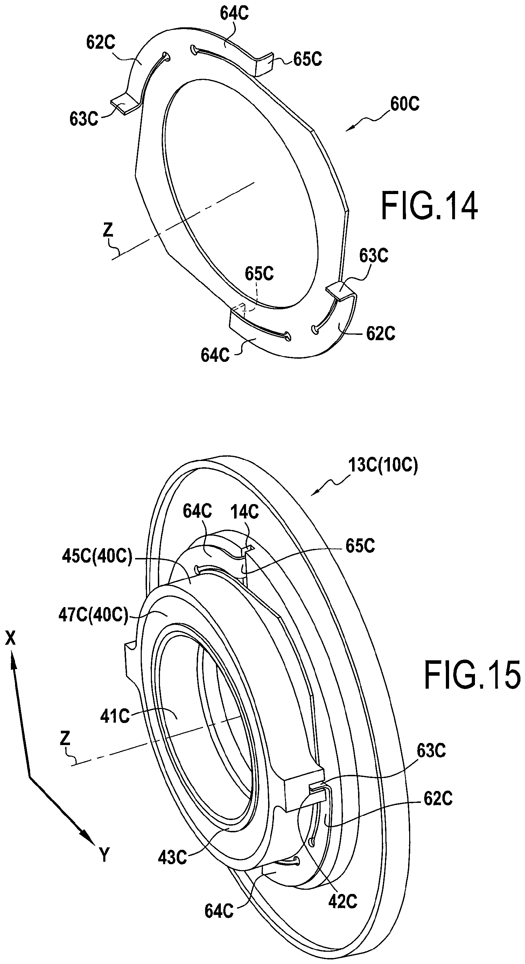

Le troisième exemple de réalisation est illustré aux figures 14 et 15 et les éléments représentés sur ces figures sont associés à des références numériques correspondant à celles utilisées sur les figures 1 à 3 et à la fin desquelles est ajoutée ici la lettre « C » pour identifier ce troisième exemple de réalisation.

On va commencer par décrire des caractéristiques qui sont, d'une manière arbitraire, prévues communes pour chacun de ces exemples de réalisation.

Un système d'étanchéité conforme au présent exposé est un système d'étanchéité à au moins une bague montée flottante 40, 40A-40C (c'est-à-dire 40, 40A, 40B et 40C, cette convention valant également pour les autres références numériques ci-dessous) dans un support 10, 10A-10C d'un arbre 20, 20A-20C tournant autour d'un axe dirigé selon une direction longitudinale Z pour la réalisation d'une étanchéité dynamique entre l'arbre 20, 20A- 20C et le support 10, 10A-10C.

Ce système d'étanchéité comprend une pièce de couplage 60, 60A-60C interposée entre la bague 40, 40A-40C et le support 10, 10A-10C et par l'intermédiaire de laquelle la bague 40, 40A-40C est solidarisée avec le support 10, 10A-10C.

Le support 10, 10A-10C et la pièce de couplage 60, 60A-60C comprennent des premières parties de liaison respectives 14, 14A-14C, 64, 64A-64C aptes à coopérer ensemble pour réaliser une première liaison cinématique autorisant un mouvement relatif du support 10, 10A-10C et de la pièce de couplage 60, 60A-60C de type pivot glissant dirigé selon une première direction transverse X, qui est définie dans un plan transverse perpendiculaire à la direction longitudinale Z.

Grâce à cette première liaison cinématique, le support 10, 10A-10C et la pièce de couplage 60, 60A-60C peuvent aussi bien translater l'un par rapport à l'autre suivant la première direction transverse X que pivoter l'un par rapport à l'autre autour de la première direction transverse X.

La bague 40, 40A-40C et la pièce de couplage 60, 60A-60C comprennent des deuxièmes parties de liaison respectives 42, 42A-42C, 62, 62A-62C aptes à coopérer ensemble pour réaliser une deuxième liaison cinématique autorisant un mouvement relatif de la bague 40, 40A-40C et de la pièce de couplage 60, 60A-60C de type pivot glissant dirigé selon une deuxième direction transverse Y, qui est perpendiculaire à la première direction transverse X et perpendiculaire à la direction longitudinale Z.

Grâce à cette deuxième liaison cinématique, la bague 40, 40A-40C et la pièce de couplage 60, 60A-60C peuvent aussi bien translater l'une par rapport à l'autre suivant la deuxième direction transverse Y que pivoter l'une par rapport à l'autre autour de la deuxième direction transverse Y.

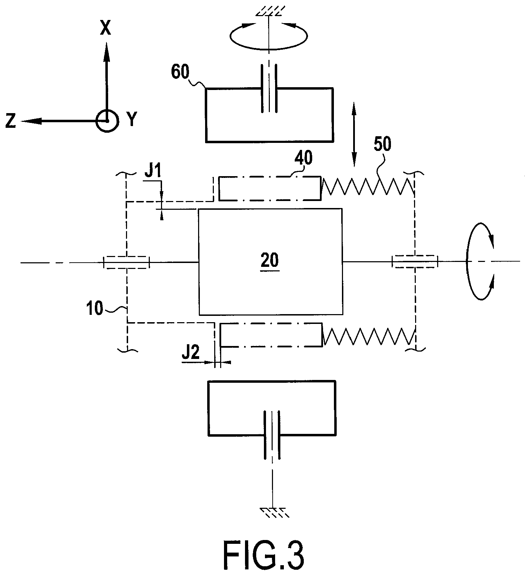

Une étanchéité J1 dite « primaire » (voir les figures 2 et 3) peut ainsi être efficacement réalisée à une interface entre une surface circonférentielle de l'arbre tournant 20, 20A-20C et une surface circonférentielle 41A-41C de la bague 40, 40A-40C, et ce même en cas de déplacements transversaux (i.e. n'importe quel déplacement, seul ou en combinaison, parmi une translation suivant la première direction transverse X, une translation suivant la deuxième direction transverse Y, une rotation autour d'un l'axe défini par la première direction transverse X, une rotation autour d'un axe défini par la deuxième direction transverse Y) de l'arbre tournant 20, 20A-20C par rapport au support 10, 10A-10C.

Dans ces exemples, l'arbre tournant 20, 20A-20C est un arbre tournant d'une machine tournante, en particulier d'une turbomachine, notamment d'une turbopompe (non représentée) dans laquelle est intégré le système d'étanchéité pour assurer une étanchéité entre une partie pompe et une partie turbine de cette turbopompe.

Dans ces exemples, le système d'étanchéité comprend une première paire de premières parties de liaison 14, 14A-14C, 64, 64A-64C appartenant respectivement au support 10, 10A-10C et à la pièce de couplage 60, 60A-60C et configurées pour coopérer mutuellement ; et une deuxième paire de premières parties de liaison 14, 14A-14C, 64, 64A-64C appartenant respectivement au support 10, 10A-10C et à la pièce de couplage 60, 60A-60C et configurées pour coopérer mutuellement, ces première et deuxième paires étant espacées l'une de l'autre selon la première direction transverse X, en particulier en étant disposées à 180° l'une de l'autre par rapport à l'axe dirigé selon la direction longitudinale Z (voir en particulier la figure 1).

Dans ces exemples, le système d'étanchéité comprend une première paire de deuxièmes parties de liaison 42, 42A-42C, 62, 62A-62C appartenant respectivement à la bague 40, 40A-40C et à la pièce de couplage 60, 60A-60C et configurées pour coopérer mutuellement ; et une deuxième paire de deuxième parties de liaison 42, 42A-42C, 62, 62A-62C appartenant respectivement à la bague 40, 40A-40C et à la pièce de couplage 60, 60A-60C et configurées pour coopérer mutuellement, ces première et deuxième paires étant espacées l'une de l'autre selon la deuxième direction transverse Y, en particulier en étant disposées à 180° l'une de l'autre par rapport à l'axe dirigé selon la direction longitudinale Z.

Dans ces exemples, la bague 40, 40A-40C est constituée de deux pièces globalement annulaires, distinctes et concentriques 45A-45C, 47A-47C, qui sont assemblées entre elles d'un seul tenant. En particulier, la première 47A-47C de ces deux pièces annulaires, de plus petit diamètre extérieur et destinée à être directement traversée par l'arbre tournant 20A-20C, est réalisée dans un matériau plus tendre que celui qui forme l'arbre tournant, afin de privilégier une usure de la surface circonférentielle 41A-41C de cette première pièce annulaire plutôt que de la surface circonférentielle de l'arbre tournant qui est destinée à venir en regard de la surface circonférentielle 41A-41C pour former l'étanchéité primaire. Par ailleurs, dans cet exemple, la deuxième 45A-45C de ces deux pièces annulaires, de plus grand diamètre extérieur, est assemblée de façon rigide avec la première pièce annulaire 47A-47C (i.e. les deux pièces annulaires ne peuvent bouger l'une par rapport à l'autre une fois assemblées). Les deuxièmes parties de liaison 42A-42C associées à la bague 40, 40A-40C sont formées dans cette deuxième pièce annulaire 45A-45C.

Dans ces exemples, la pièce de couplage 60, 60A-60C est :
▪ globalement de forme annulaire ;
▪ constituée d'une seule pièce ;
▪ réalisée en matériau métallique.

Dans ces exemples, le support 10, 10A-10C et la bague 40, 40A-40C comprennent des troisièmes parties de liaison respectives 15A, 15B, 43A-43C aptes à coopérer ensemble pour réaliser une troisième liaison cinématique autorisant un mouvement relatif du support 10, 10A-10C et de la bague 40, 40A-40C de type appui plan dans un plan transverse perpendiculaire à la direction longitudinale Z.

Une étanchéité J2 dite « secondaire » (voir les figures 2 et 3) peut ainsi être efficacement réalisée à une interface entre une surface plane transverse 15A, 15Bdu support 10, 10A-10C et une surface plane transverse 43A-43C de la bague 40, 40A-40C. Ces surfaces planes transverses comme leur nom l'indique, sont prévues perpendiculaires à la direction longitudinale Z.

Dans ces exemples, le système d'étanchéité comprend un élément de sollicitation 50, 50A, 50B apte à coopérer avec le support 10, 10A-10C et la bague 40, 40A-40C pour solliciter la coopération des troisièmes parties de liaison respectives 15A, 15B, 43A-43C.

Dans ces exemples, le support 10, 10A-10C comprend deux pièces 11A-11C, 13A-13C distinctes, assemblées entre elles à l'aide de moyens de fixation conventionnels tels que des vis et écrous. Ces deux pièces s'étendent de part et d'autre, suivant la direction longitudinale Z, de la bague 40, 40A-40C et de la pièce de couplage 60, 60A-60C. En particulier, une première 11A-11C de ces deux pièces comporte la surface plane transverse 15A-15C destinée à venir en regard de la surface plane transverse 43A-43C de la bague 40, 40A-40C pour former l'étanchéité secondaire. La deuxième 13A-13C de ces deux pièces comporte une partie qui s'étend transversalement et qui est espacée, suivant la direction longitudinale Z, de la surface plane transverse 15A-15C avec la bague 40, 40A-40C interposée entre eux. Dans ces exemples, cette partie de la deuxième pièce 13A-13C sert de lieu d'appui pour une première portion de l'élément de sollicitation 50, 50A-50B, une deuxième portion de cet élément venant appuyer élastiquement sur la bague 40, 40A-40C.

On va à présent décrire plus en détails les spécificités du premier exemple de réalisation.

Dans le premier exemple de réalisation, chacune des premières 14A, 64A et chacune des deuxièmes 42A, 62A parties de liaison est non déformable (dans des conditions normales d'utilisation du système d'étanchéité).

Pour ce faire, les premières parties de liaison sont constituées par des ergots 14A faisant saillie depuis le support 10A (en particulier depuis la deuxième pièce 13A de ce support) ; et des évidements 64A qui sont formés dans la pièce de couplage 60A et qui sont aptes à coopérer avec les ergots 14A pour réaliser la première liaison cinématique autorisant un mouvement relatif du support 10A et de la pièce de couplage 60A de type pivot glissant dirigé selon la première direction transverse X (voir en particulier les figures 4, 5 et 9B).

On pourrait toutefois prévoir, sans sortir du cadre du présent exposé, de disposer au moins un de ces ergots sur la pièce de couplage et au moins l'évidement correspondant sur le support.

Les deuxièmes parties de liaison sont constituées par des ergots 42A faisant saillie depuis la bague 40A (en particulier depuis la deuxième pièce annulaire 45A de cette bague) ; et des évidements 62A qui sont formés dans la pièce de couplage 60A et qui sont aptes à coopérer avec les ergots 42A pour réaliser la deuxième liaison cinématique autorisant un mouvement relatif de la bague 40A et de la pièce de couplage 60A de type pivot glissant dirigé selon la deuxième direction transverse Y (voir en particulier les figures 4, 5 et 9A).

On pourrait toutefois prévoir, sans sortir du cadre du présent exposé, de disposer au moins un de ces ergots sur la pièce de couplage et au moins l'évidement correspondant sur la bague.

Comme cela est bien visible sur les figures 4 et 5, les ergots 14A sont espacés selon la première direction transverse X, tandis que les ergots 42A sont espacés selon la deuxième direction transverse Y, qui est perpendiculaire à la première direction transverse X. De même, les évidements 64A sont espacés selon la première direction transverse X, tandis que les évidements 62A sont espacés selon la deuxième direction transverse Y. La bague 40A peut suivre les déplacements en translation et en rotation de l'arbre tournant 20A dans un plan transverse défini par les première et deuxième directions X et Y (voir la différence de position de la bague entre les figures 4 et 5, lorsque le centre O1 de l'arbre tournant se déplace dans ce plan transverse par rapport à un point de référence O2 du support 10A) grâce aux formes des ergots 42A, 14A et des évidements associés 62A, 64A, qui en particulier peuvent coopérer en réalisant des jeux fonctionnels qui autorisent de telles translations et rotations suivant les première et deuxième directions X et Y. En revanche, les formes des évidements 62A, 64A et des ergots 42A, 14A empêchent la bague d'être entraînée en rotation suivant l'axe moteur de l'arbre tournant défini suivant la direction longitudinale Z.

Dans cet exemple, les évidements 62A, 64A autorisent une translation des ergots 42A, 14A selon la direction longitudinale Z, ce qui peut rendre plus aisée un maintien de la coopération des troisièmes parties de liaison 43A, 15A réalisant la troisième liaison cinématique précitée.

Dans ce premier exemple, la pièce de couplage 60A et l'élément de sollicitation 50A sont dissociés l'un de l'autre. En particulier, l'élément de sollicitation 50A est conformé en une pièce métallique élastique tronconique (on pourrait également utiliser, sans sortir du cadre du présent exposé et non limitativement, un ou plusieurs ressort(s) ondulé(s) ou tout autre moyen élastique), qui comprend une première portion d'extrémité venant en appui sur le support 10A (en particulier sur la partie de la deuxième pièce 13A du support qui s'étend transversalement) ; et une deuxième portion d'extrémité opposée à la première venant en appui sur la bague 40A (en particulier sur une surface transversale plane de la deuxième pièce annulaire 45A de la bague et/ou de la première pièce annulaire 47A).

On va à présent décrire plus en détail les spécificités du deuxième exemple de réalisation.

Dans le deuxième exemple de réalisation, les premières parties de liaison 64B appartenant à la pièce de couplage 60B sont aptes à être déformées élastiquement par flexion, tandis que les premières parties de liaison associées 14B, qui appartiennent au support 10B, sont non déformables (dans des conditions normales d'utilisation du système d'étanchéité).

En particulier, chacune des premières parties de liaison 64B est constituée par une lamelle comprenant une première extrémité raccordée élastiquement à la pièce de couplage 60B de manière à ce que la lamelle puisse élastiquement pivoter à cette première extrémité par rapport à la pièce de couplage 60B autour d'un axe de pivotement parallèle à la direction longitudinale Z ; et une deuxième extrémité opposée à la première depuis laquelle fait saillie, à l'extérieur de la pièce de couplage 60B, une languette 65B s'étendant dans un plan transverse perpendiculaire à la direction longitudinale Z.

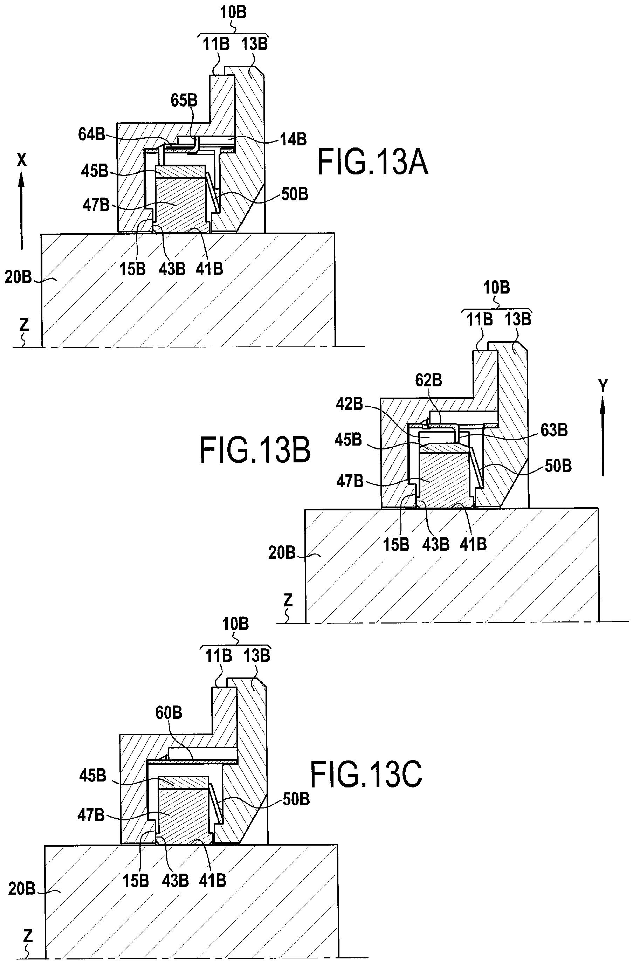

Chacune des premières parties de liaison 14B est constituée par un évidement apte à coopérer avec la languette 65B correspondante pour réaliser, grâce aux déformations élastiques des lamelles, la première liaison cinématique autorisant un mouvement relatif du support 10B et de la pièce de couplage 60B de type pivot glissant dirigé selon la première direction transverse X (voir en particulier les figures 11 et 13A). Dans cet exemple, chaque languette 65B peut coulisser dans l'évidement 14B associé selon la direction longitudinale Z, ce qui peut rendre plus aisée un maintien de la coopération des troisièmes parties de liaison réalisant la troisième liaison cinématique précitée.

On pourrait toutefois prévoir, sans sortir du cadre du présent exposé, de disposer au moins une de ces lamelles sur le support et au moins l'évidement correspondant sur la pièce de couplage.

Par ailleurs, dans le deuxième exemple de réalisation, les deuxièmes parties de liaison 62B appartenant à la pièce de couplage 60B sont aptes à être déformées élastiquement par flexion, tandis que les deuxièmes parties de liaison associées 42B, qui appartiennent à la bague 40B, sont non déformables (dans des conditions normales d'utilisation du système d'étanchéité).

En particulier, chacune des deuxièmes parties de liaison 62B est constituée par une lamelle comprenant une première extrémité raccordée élastiquement à la pièce de couplage 60B de manière à ce que la lamelle puisse élastiquement pivoter à cette première extrémité par rapport à la pièce de couplage 60B autour d'un axe de pivotement parallèle à la direction longitudinale Z ; et une deuxième extrémité opposée à la première depuis laquelle fait saillie, à l'intérieur de la pièce de couplage 60B, une languette 63B s'étendant dans un plan transverse perpendiculaire à la direction longitudinale Z, en particulier le même plan transverse que celui dans lequel les languettes 65B s'étendent.

Chacune des deuxièmes parties de liaison 42B est constituée par un évidement apte à coopérer avec la languette 63B correspondante pour réaliser, grâce aux déformations élastiques des lamelles, la deuxième liaison cinématique autorisant un mouvement relatif de la bague 40B et de la pièce de couplage 60B de type pivot glissant dirigé selon la deuxième direction transverse Y (voir en particulier les figures 11 et 13B).

Dans cet exemple, chaque languette 63B peut coulisser dans l'évidement associé selon la direction longitudinale Z, ce qui peut rendre plus aisée un maintien de la coopération des troisièmes parties de liaison réalisant la troisième liaison cinématique précitée.

On pourrait toutefois prévoir, sans sortir du cadre du présent exposé, de disposer au moins une de ces lamelles sur la bague et au moins l'évidement correspondant sur la pièce de couplage.

Dans ce deuxième exemple, les lamelles 64B sont espacées selon la première direction transverse X (en particulier en étant disposées à 180° l'une de l'autre par rapport à l'axe dirigé selon la direction longitudinale Z), tandis que les lamelles 62B sont espacées selon la deuxième direction transverse Y (en particulier en étant disposées à 180° l'une de l'autre par rapport à l'axe dirigé selon la direction longitudinale Z), qui est perpendiculaire à la première direction transverse X. De même, les évidements 14B sont espacés selon la première direction transverse X (en particulier en étant disposés à 180° l'un de l'autre par rapport à l'axe dirigé selon la direction longitudinale Z), tandis que les évidements 42B sont espacés selon la deuxième direction transverse Y (en particulier en étant disposés à 180° l'un de l'autre par rapport à l'axe dirigé selon la direction longitudinale Z). La bague 40B peut suivre les translations (déplacements radiaux) de l'arbre tournant 20B dans un plan transverse défini par les première et deuxième directions X et Y par déformation élastique de type flexion des lamelles 62B et 64B par rapport à la pièce de couplage 60B et au support 10B. La bague 40B peut également suivre les rotations de l'arbre tournant 20B suivant les axes définis par les première et deuxième directions X et Y grâce aux formes des languettes 63B, 65B et des évidements 42B, 14B associés, qui en particulier peuvent coopérer en réalisant des jeux fonctionnels qui autorisent de telles rotations. En revanche, les formes des évidements 14B, 42B et des lamelles 64B, 62B (en particulier de leurs languettes 65B, 63B) empêchent la bague d'être entraînée en rotation suivant l'axe moteur de l'arbre tournant défini suivant la direction longitudinale Z.

Dans ce deuxième exemple, la pièce de couplage 60B et l'élément de sollicitation 50B sont dissociés l'un de l'autre. En particulier, l'élément de sollicitation 50B est analogue à celui du premier exemple décrit ci-avant (voir notamment les figures 13A à 13C). Il ne sera donc pas à nouveau décrit en relation avec le deuxième exemple dans un souci de concision du présent exposé.

On va à présent décrire plus en détails les spécificités du troisième exemple de réalisation.

Dans le troisième exemple de réalisation (voir les figures 14 et 15), les premières parties de liaison 64C appartenant à la pièce de couplage 60C sont aptes à être déformées élastiquement par flexion, tandis que les premières parties de liaison associées 14C, qui appartiennent au support 10C, sont non déformables (dans des conditions normales d'utilisation du système d'étanchéité).

En particulier, chacune des premières parties de liaison 64C est constituée par une lamelle comprenant une première extrémité raccordée élastiquement à la pièce de couplage 60C de manière à ce que la lamelle puisse élastiquement pivoter à cette première extrémité par rapport à la pièce de couplage 60C autour d'un axe de pivotement perpendiculaire à la direction longitudinale Z; et une deuxième extrémité opposée à la première depuis laquelle fait saillie depuis la pièce de couplage 60C, en direction opposée de la bague 40C, une languette 65C s'étendant dans un plan qui est parallèle à la direction longitudinale Z et parallèle à la première direction transverse X.

Chacune des premières parties de liaison 14C est constituée par un évidement apte à coopérer avec la languette 65C correspondante pour réaliser, dans cet exemple grâce aux déformations élastiques des lamelles et grâce au jeu existant entre la languette 65C et l'évidement 14C permettant à la languette 65C et l'évidement 14C de translater ou pivoter l'un par rapport à l'autre selon la première direction transverse X, la première liaison cinématique autorisant un mouvement relatif du support 10C et de la pièce de couplage 60C de type pivot glissant dirigé selon la première direction transverse X.

Dans cet exemple, chaque languette 64C peut coulisser dans l'évidement associé selon la direction longitudinale Z, ce qui peut rendre plus aisée un maintien de la coopération des troisièmes parties de liaison réalisant la troisième liaison cinématique précitée.

On pourrait toutefois prévoir, sans sortir du cadre du présent exposé, de disposer au moins une de ces lamelles sur le support et au moins l'évidement correspondant sur la pièce de couplage.

Par ailleurs, dans le troisième exemple de réalisation, les deuxièmes parties de liaison 62C appartenant à la pièce de couplage 60C sont aptes à être déformées élastiquement par flexion, tandis que les deuxièmes parties de liaison associées 42C, qui appartiennent à la bague 40C, sont non déformables (dans des conditions normales d'utilisation du système d'étanchéité).

En particulier, chacune des deuxièmes parties de liaison 62C est constituée par une lamelle comprenant une première extrémité raccordée élastiquement à la pièce de couplage 60C de manière à ce que la lamelle puisse élastiquement pivoter à cette première extrémité par rapport à la pièce de couplage 60C autour d'un axe de pivotement perpendiculaire à la direction longitudinale Z; et une deuxième extrémité opposée à la première depuis laquelle fait saillie depuis la pièce de couplage 60B, en direction de la bague 40C, une languette 63C s'étendant dans un plan qui est parallèle à la direction longitudinale Z et parallèle à la deuxième direction transverse Y.

Chacune des deuxièmes parties de liaison 42C est constituée par un évidement apte à coopérer avec la languette 63C correspondante pour réaliser, dans cet exemple grâce aux déformations élastiques des lamelles et grâce au jeu existant entre la languette 63C et l'évidement 42C permettant à la languette 63C et l'évidement 42C de translater ou pivoter l'un par rapport à l'autre selon la deuxième direction transverse Y, la deuxième liaison cinématique autorisant un mouvement relatif de la bague 40C et de la pièce de couplage 60C de type pivot glissant dirigé selon la deuxième direction transverse Y.

Dans cet exemple, chaque languette 62C peut coulisser dans l'évidement associé selon la direction longitudinale Z, ce qui peut rendre plus aisée un maintien de la coopération des troisièmes parties de liaison réalisant la troisième liaison cinématique précitée.

On pourrait toutefois prévoir, sans sortir du cadre du présent exposé, de disposer au moins une de ces lamelles sur la bague et au moins l'évidement correspondant sur la pièce de couplage.

Dans ce troisième exemple, les lamelles 64C sont espacées selon la première direction transverse X (en particulier en étant disposées à 180° l'une de l'autre par rapport à l'axe dirigé selon la direction longitudinale Z), tandis que les lamelles 62C sont espacées selon la deuxième direction transverse Y (en particulier en étant disposées à 180° l'une de l'autre par rapport à l'axe dirigé selon la direction longitudinale Z), qui est perpendiculaire à la première direction transverse X. De même, les évidements 14C sont espacés selon la première direction transverse X (en particulier en étant disposés à 180° l'un de l'autre par rapport à l'axe dirigé selon la direction longitudinale Z), tandis que les évidements 42C sont espacés selon la deuxième direction transverse Y (en particulier en étant disposés à 180° l'un de l'autre par rapport à l'axe dirigé selon la direction longitudinale Z). La bague 40C peut suivre les rotations de l'arbre tournant 20C suivant les première et deuxième directions X et Y par déformation élastique de type flexion des lamelles 62C et 64C par rapport à la pièce de couplage 60C et au support 10C. La bague 40C peut également suivre les translations (déplacements radiaux) de l'arbre tournant 20C suivant les première et deuxième directions X et Y grâce aux formes des languettes 63C, 65C et des évidements 42C, 14C associés, qui en particulier peuvent coopérer en réalisant des jeux fonctionnels qui autorisent de telles translations. En revanche, les formes des évidements 14C, 42C et des lamelles 64C, 62C (en particulier de leurs languettes 65C, 63C) empêchent la bague d'être entraînée en rotation suivant l'axe moteur de l'arbre tournant défini suivant la direction longitudinale Z.

Dans ce troisième exemple, la pièce de couplage 60C et l'élément de sollicitation sont formés d'un seul tenant. En particulier, l'élément de sollicitation est constitué par les lamelles 62C, 64C élastiques. Plus particulièrement, l'élément de sollicitation comprend une première portion d'extrémité, qui est définie par les lamelles 64C, et qui vient en appui sur le support 10C (en particulier sur la partie de la deuxième pièce 13C du support qui s'étend transversalement) par l'intermédiaire des languettes 65C de ces lamelles 64C qui font saillie en direction opposée de la bague 40C (en particulier en direction de la deuxième pièce 13C) ; et une deuxième portion d'extrémité opposée à la première, qui est définie par les lamelles 62C, et qui vient en appui sur la bague 40C (en particulier sur la deuxième pièce annulaire 45C de la bague) par l'intermédiaire des languettes 63C de ces lamelles 62C qui font saillie en direction de la bague 40C.

Les modes ou exemples de réalisation décrits dans le présent exposé sont donnés à titre illustratif et non limitatif, une personne du métier pouvant facilement, aux vus de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Système d'étanchéité à au moins une bague montée flottante (40, 40A-40C) dans un support (10, 10A-10C) d'un arbre (20, 20A-20C) tournant autour d'un axe dirigé selon une direction longitudinale (Z) pour la réalisation d'une étanchéité dynamique entre l'arbre (20, 20A-20C) et le support (10, 10A-10C), **caractérisé en ce que** :
le système comprend une pièce de couplage (60, 60A-60C) interposée entre la bague (40, 40A-40C) et le support (10, 10A-10C) et par l'intermédiaire de laquelle la bague (40, 40A-40C) est solidarisée avec le support (10, 10A-10C) ;
le support (10, 10A-10C) et la pièce de couplage (60, 60A-60C) comprennent des premières parties de liaison respectives (14, 14A-14C, 64, 64A-64C) aptes à coopérer ensemble pour réaliser une première liaison cinématique autorisant un mouvement relatif du support (10, 10A-10C) et de la pièce de couplage (60, 60A-60C) de type pivot glissant dirigé selon une première direction transverse (X) ;
la bague (40, 40A-40C) et la pièce de couplage (60, 60A-60C) comprennent des deuxièmes parties de liaison respectives (42, 42A-42C, 62, 62A-62C) aptes à coopérer ensemble pour réaliser une deuxième liaison cinématique autorisant un mouvement relatif de la bague (40, 40A-40C) et de la pièce de couplage (60, 60A-60C) de type pivot glissant dirigé selon une deuxième direction transverse (Y) perpendiculaire à la première direction transverse (X).

2. Système selon la revendication 1, dans lequel chacune des premières (14A, 64A) et/ou chacune des deuxièmes (42A, 62A) parties de liaison est non déformable.

3. Système selon la revendication 1 ou 2, dans lequel au moins une des premières (14B, 14C, 64B, 64C) et/ou des deuxièmes (42B, 42C, 62B, 62C) parties de liaison est apte à être déformée élastiquement par flexion.

4. Système selon l'une quelconque des revendications 1 à 3, dans lequel au moins une des premières (14C, 64C) et/ou des deuxièmes (42C, 62C) parties de liaison est apte à être déformée élastiquement par torsion.

5. Système selon l'une quelconque des revendications 1 à 4, dans lequel le support (10, 10A-10C) et la bague (40, 40A-40C) comprennent des troisièmes parties de liaison respectives (15A, 15B, 43A-43C) aptes à coopérer ensemble pour réaliser une troisième liaison cinématique autorisant un mouvement relatif du support (10, 10A-10C) et de la bague (40, 40A-40C) de type appui plan dans un plan transverse.

6. Système selon la revendication 5, comprenant un élément de sollicitation (50, 50A, 50B) apte à coopérer avec le support (10, 10A-10C) et la bague (40, 40A-40C) pour solliciter la coopération des troisièmes parties de liaison respectives (15A, 15B, 43A-43C).

7. Système selon la revendication 6, dans lequel la pièce de couplage (60A, 60B) et l'élément de sollicitation (50A, 50B) sont dissociés l'un de l'autre.

8. Système selon la revendication 6, dans lequel la pièce de couplage (60C) et l'élément de sollicitation sont formés d'un seul tenant.

9. Système selon l'une quelconque des revendications 6 à 8, dans lequel le plan transverse et l'élément de sollicitation (50A, 50B) sont agencés longitudinalement de part et d'autre de la bague (40A, 40B).

10. Turbopompe comprenant un arbre tournant (20, 20A-20C) et un système d'étanchéité selon l'une quelconque des revendications 1 à 9.

## Patentansprüche

1. Dichtungssystem mit mindestens einem schwimmend gelagerten Ring (40, 40A-40C) in einem Träger (10, 10A-10C) einer Welle (20, 20A-20C), die sich um eine in Längsrichtung ausgerichtete Achse (Z) dreht, um eine dynamische Abdichtung zwischen der Welle (20, 20A-20C) und dem Träger (10, 10A-10C) zu bilden, **dadurch gekennzeichnet, dass**:
das System ein Kupplungsstück (60, 60A-60C) umfasst, das zwischen dem Ring (40, 40A-40C) und dem Träger (10, 10A-10C) angeordnet ist, und mittels dessen der Rings (40, 40A-40C) fest mit dem Träger (10, 10A-10C) verbunden ist,
wobei der Träger (10, 10A-10C) und das Kupplungsstück (60, 60A-60C) jeweils erste Verbindungsteile (14, 14A-14C, 64, 64A-64C) umfassen, die zusammenwirken können, um eine erste kinematische Verbindung herzustellen, die eine relative Bewegung des Trägers (10, 10A-10C) und des Kupplungsstücks (60, 60A-60C) vom Drehschubtyp ermöglicht, die in einer ersten Querrichtung (X) ausgerichtet ist,
wobei der Ring (40, 40A-40C) und das Kupplungsstück (60, 60A-60C) jeweils zweite Verbindungsteile (42, 42A-42C, 62, 62A-62C) umfassen, die zusammenwirken können, um eine zweite kinematische Verbindung 20 zu bilden, die eine relative Bewegung des Rings (40, 40A-40C) und des Kupplungsstücks (60, 60A-60C) vom Drehschubtyp ermöglicht, die in einer zweiten Querrichtung (Y) senkrecht zur ersten Querrichtung (X) ausgerichtet ist.

2. System nach Anspruch 1, wobei jedes der ersten (14A, 64A) und/oder jedes der zweiten (42A, 62A) Verbindungsteile nicht verformbar ist.

3. System nach Anspruch 1 oder 2, wobei mindestens eines der ersten (14B, 14C, 64B, 64C) und/oder der zweiten (42B, 42C, 62B, 62C) Verbindungsteile durch Biegen elastisch verformbar ist.

4. System nach einem der Ansprüche 1 bis 3, wobei mindestens einer der ersten (14C, 64C) und/oder der zweiten (42C, 62C) Verbindungsteile durch Torsion elastisch verformbar ist.

5. System nach einem der Ansprüche 1 bis 4, wobei der Träger (10, 10A-10C) und der Ring (40, 40A-40C) jeweils dritte Verbindungsteile (15A, 15B, 43A-43C) umfassen, die zusammenwirken können, um eine dritte kinematische Verbindung zu bilden, die eine relative Bewegung des Trägers (10, 10A-10C) und des Rings (40, 40A-40C) vom Plattentyp in einer Querebene ermöglicht.

6. System nach Anspruch 5, umfassend ein Vorspannelement (50, 50A, 50B), das mit dem Träger (10, 10A-10C) und dem Ring (40, 40A-40C) zusammenwirken kann, um das Zusammenwirken der jeweils dritten Verbindungsteile (15A, 15B, 43A-43C) zu bewirken.

7. System nach Anspruch 6, wobei das Kupplungsstück (60A, 60B) und das Vorspannelement (50A, 50B) voneinander getrennt sind.

8. System nach Anspruch 6, wobei das Kupplungsstück (60C) und das Vorspannelement einstückig ausgebildet sind.

9. System nach einem der Ansprüche 6 bis 8, wobei die Querebene und das Vorspannelement (50A, 50B) in Längsrichtung auf jeder Seite des Rings (40A, 40B) angeordnet sind.

10. Turbopumpe, umfassend eine Drehwelle (20, 20A-20C) und ein Dichtungssystem nach einem der Ansprüche 1 bis 9.

## Claims

1. A sealing system for at least one floatingly mounted ring (40, 40A-40C) in a support (10, 10A-10C) for a rotary shaft (20, 20A-20C) rotatable about an axis directed along a longitudinal direction (Z) in order to provide dynamic sealing between the shaft (20, 20A-20C) and the support (10, 10A-10C), the system being **characterized in that**:
it comprises a coupling part (60, 60A-60C) interposed between the ring (40, 40A-40C) and the support (10, 10A-10C), whereby the ring (40, 40A-40C) is secured to the support (10, 10A-10C);
the support (10, 10A-10C) and the coupling part (60, 60A-60C) comprise respective first joint portions (14, 14A-14C, 64, 64A-64C) suitable for co-operating together to provide a first kinematic joint allowing cylindrical joint type relative movement between the support (10, 10A-10C) and the coupling part (60, 60A-60C) with respect to a first transverse direction (X); and
the ring (40, 40A-40C) and the coupling part (60, 60A-60C) comprise second respective joint portions (42, 42A-42C, 62, 62A-62C) suitable for co-operating together to provide a second kinematic joint allowing cylindrical joint type relative movement between the ring (40, 40A-40C) and the coupling part (60, 60A-60C) with respect to a second transverse direction (Y) perpendicular to the first transverse direction (X).

2. A system according to claim 1, wherein each of the first and/or each of the second joint portions (14A, 64A and/or 42A, 62A) is not deformable.

3. A system according to claim 1 or claim 2, wherein at least one of the first and/or second joint portions (14B, 14C, 64B, 64C and/or 42B, 42C, 62B, 62C) is suitable for being deformed elastically in bending.

4. A system according to any one of claims 1 to 3, wherein at least one of the first and/or second joint portions (14C, 64C and/or 42C, 62C) is suitable for being deformed elastically in twisting.

5. A system according to any one of claims 1 to 4, wherein the support (10, 10A-10C) and the ring (40, 40A-40C) comprise third respective joint portions (15A, 14B, 43A-43C) suitable for co-operating together to provide a third kinematic joint allowing planar joint type relative movement between the support (10, 10A-10C) and the ring (40, 40A-40C) in a transverse plane.

6. A system according to claim 5, comprising a bias element (50, 50A, 50B) suitable for co-operating with the support (10, 10A-10C) and the ring (40, 40A-40C) to bias the co-operation between the respective third joint portions (15A, 15B, 43A-43C).

7. A system according to claim 6, wherein the coupling part (60A, 60B) and the bias element (50A, 50B) are dissociated from each other.

8. A system according to claim 6, wherein the coupling part (60C) and the bias element are formed as a single unit.

9. A system according to any one of claims 6 to 8, wherein the transverse plane and the bias element (50A, 50B) are arranged longitudinally on either side of the ring (40A, 40B).

10. A turbopump including a rotary shaft (20, 20A-20C) and a sealing system according to any one of claims 1 to 9.
